# EUROPÄISCHE PATENTSCHRIFT

(11) **EP 2 211 398 B1**
(45) Veröffentlichungstag und Bekanntmachung des Hinweises auf die Patenterteilung: **10.01.2018**
(21) Anmeldenummer: 09150875.4
(22) Anmeldetag: 19.01.2009
(51) Int. Cl.: H01M 2/02, H01M 2/04, H01M 2/14, H01M 2/18, H01M 10/04

(54) **Galvanisches Element für hohe Beanspruchungen**
Heavy-duty galvanic element
Elément galvanique pour exigences élevées

(43) Veröffentlichungstag der Anmeldung: 28.07.2010
(73) Patentinhaber: Renata AG, 4452 Itingen (CH)
(72) Erfinder: Pfrommer, Stefan, 5074 Eiken (CH); Ockenfuss, Ulrich, 77761 Schiltach (DE); Häring, Pascal, 4147 Aesch (CH); Jansen, Dirk, 77797 Ohlsbach (DE)
(74) Vertreter: Goulette, Ludivine

(56) Entgegenhaltungen:
- WO-A-97/14187
- DE-A1- 3 113 309
- DE-A1- 19 651 976
- JP-A- 8 321 287
- JP-A- H0 950 815
- US-A1- 2006 183 019
- US-B1- 6 569 564

## Beschreibung

Die vorliegende Erfindung betrifft ein galvanisches Element, insbesondere vom Knopfzellentyp, mit einer Kathode, einer Anode, einem Elektrolyten, einem zwischen Anode und Kathode angeordneten Separator und einem Gehäuse. Das Gehäuse umfasst einen Gehäusebecher, einen Gehäusedeckel und ein Dichtungselement, wobei letzteres den Gehäusebecher gegen den Gehäusedeckel isoliert.

Galvanische Elemente, insbesondere solche in Knopfzellenform, weisen üblicherweise ein solches Gehäuse auf. Derartige galvanische Elemente können die verschiedensten elektrochemischen Systeme enthalten, beispielsweise Zink/MnO₂, primäre Lithium-Systeme oder auch sekundäre Systeme wie Nickel/Cadmium, Nickel/Metallhydrid oder sekundäre Lithium-Systeme.

Der flüssigkeitsdichte Verschluss solcher Zellen erfolgt gewöhnlich durch Umbördeln des Becherrandes über den Rand des Gehäusedeckels in Verbindung mit einem Kunststoffring, der zwischen Gehäusebecher und Gehäusedeckel angeordnet ist, und gleichzeitig als Dichtungselement sowie zur elektrischen Isolierung des Gehäusebechers von dem Gehäusedeckel dient. Derartige Knopfzellen sind beispielsweise aus der DE 31 13 309 bekannt.

Bei den bekannten galvanischen Elementen dieser Art liegt der Separator üblicherweise sandwich-artig zwischen Anode und Kathode, wobei diese drei Bauteile konzentrisch zueinander angeordnet sind. Dabei verbleibt aussen ein schmaler umlaufender Spalt zwischen dem Separator und dem Dichtungselement. Der Separator kann zudem insbesondere bei hoher mechanischer Beanspruchung des galvanischen Elements in Bezug auf Kathode und Anode verrutschen, wodurch sich der existierende Spalt vergrössert. Daher kann es bei starker Beanspruchung des galvanischen Elements, beispielsweise durch hohe Temperaturen oder starke Temperaturschwankungen oder wenn das Element hohen Beschleunigungen oder Druckdifferenzen ausgesetzt wird, passieren, dass Partikel der Kathode freigesetzt werden und den Separator aussen umwandern. Dies kann zu einem Kurzschluss in der Zelle führen, der eine schnelle und eine unkontrollierte Selbstentladung der Batterie bewirkt.

Das Dokument US 6569564 B1 offenbart eine Knopfzelle mit einem vorgeformten, deckelfömigen Separator, dessen äusserer ringförmiger Teil in Kontakt mit einem Dichtungselement ist, wobei dieses Dichtungselement nach einem Kräuselprozess U-förmig ausgebildet ist, und sowohl der äussere Rand des Deckels der Knopfzelle und der äussere ringförmige Teil des Separators dazwischen eingeklemmt sind. Jedoch sind die Flächen der eingeklemmten Teile des Separators und dem Dichtungselement nicht gebondet, so dass ein radiales Verrutschen des Separators bei hohen Beanspruchen dieser Knopfzelle nicht ausgeschlossen ist.

Der vorliegenden Erfindung liegt die Aufgabe zugrunde, eine galvanische Zelle der eingangs genannten Gattung bereitzustellen, bei der dieses Phänomen zuverlässig verhindert wird.

Diese Aufgabe wird erfindungsgemäss dadurch gelöst, dass das Dichtungselement fest mit dem Separator verbunden ist. Damit existiert kein umlaufender Spalt mehr zwischen dem Separator und dem Dichtungselement, durch den Partikel aus der Kathode (oder auch der Anode) den Separator umwandern könnten. Auch ein Verrutschen des Separators ist nicht mehr möglich. Man erhält somit ein galvanisches Element, welches auch bei hohen Belastungen, beispielsweise bei hohen Beschleunigungen oder hohen Temperaturen, eine lange Lebensdauer hat.

JPH 0950815 A is auch aus dem Stand der Technik bekannt. Dieses Dokument offenbart ein galvanische Element, insbesondere vom Knopfzellentyp, mit einer Kathode, einer Anode, einem Elektrolyten, einem zwischen Anode und Kathode angeordneten Separator und einem Gehäuse, welches einen Gehäusebecher, einen Gehäusedeckel und ein Dichtungselement umfasst, wobei das Dichtungselement den Gehäusebecher gegen den Gehäusedeckel isoliert ist, wobei das Dichtungselement in radialer Richtng einen U-förmigen Querschnitt mit zwei Dichtungslippen aufweist, wobei der Separator wenigstens über die in radialer Richtung innere Dichtungslippe radial nach aussen übersteht, wobei der Separator mit der inneren Dichtunslippe des Dichtungselementes fest verbunden ist, und wobei der radial aussen über diese inneren Dichtungslippe überstehende Teil des Separator senkrecht zu seinem radial innen von dem Dichtungselement liegenden Bereich abknickt, wobein der radial aussen über die innrer Dichtungslippe des Dichtungselementes überstehende Teil des Separators zwischen dem Gehäusedeckel und dieser Dichtungslippe des Dichtungselementes eingeklemmt ist.

Eine zweite Aufgabe der vorliegenden Erfindung ist, in der Position des Separators zu verbessern halten.

Diese Aufgabe wird erfindungsgemäss dadurch gelöst, dass das Dichtungselement mit dem Separator kontinuierlich entlang einem gesamten ringförmigen Befestigungsbereich, der auf einer obere Oberfläche der besagten inneren Dichtungslippe angeordnet ist, verschweisst oder geklebt ist, wobei die Oberfläche in einer Ebene orthogonal zur radialen Richtung erstreckt.

Gemäss einer bevorzugten Ausführungsform der Erfindung ist das Dichtungselement ringförmig und ist entlang seines gesamten Umfangs fest mit dem Separator verbunden. Durch die durchgängige Verbindung entlang des gesamten Umfangs wird das galvanische Element in zwei voneinander getrennte Kammern aufgeteilt, wobei die Anode sich in einer der Kammern, und die Kathode in der anderen Kammer befindet. Ein Umwandern des Separators durch einzelne Partikel ist damit ausgeschlossen.

Der Separator kann mit dem Dichtungselement verschweisst sein. Alternativ kann der Separator auch mit dem Dichtungselement verklebt sein. Andere Befestigungsarten sind ebenfalls denkbar, entscheidend ist, dass man eine dauerhafte Verbindung erhält. Erfindungsgemäß wird ein Dichtungselement verwendet, welches in radialer Richtung einen U-förmigen Querschnitt aufweist. Derartige Dichtungselemente sind aus dem Stand der Technik hinreichend bekannt und werden üblicherweise für galvanische Zellen gemäss dem Oberbegriff des Anspruchs 1 verwendet. Gemäss der Erfindung steht der Separator zumindest über den in radialer Richtung inneren Schenkel des U des Dichtungselementes, d.h. über die innere Dichtungslippe, radial nach aussen über. Dabei ist der Separator mit dieser inneren Dichtungslippe des Dichtungselementes fest verbunden, sodass er zusammen mit der inneren Dichtungslippe des Dichtungselementes eine becherartige Einheit bildet, welche eine Elektrode, beispielsweise die Kathode, aufnehmen kann.

Der radial aussen über die innere Dichtungslippe des Dichtungselementes überstehende Teil des Separators knickt in Bezug auf die Ebene, in der der zentrale Bereich des Separators liegt, senkrecht ab und erstreckt sich dann in dem U des Dichtungselementes entlang der inneren Dichtungslippe. Dabei ist der aussen radial über die innere Dichtungslippe überstehende Teil des Separators zwischen dem Gehäusedeckel und der inneren Dichtungslippe des Dichtungselementes eingeklemmt. Der Separator wird damit nicht nur durch die beispielsweise geklebte oder geschweisste Verbindung mit dem Dichtungselement an Ort und Stelle gehalten, sondern ein Verrutschen des Separators und somit das Entstehen eines Spaltes wird zusätzlich durch die Einklemmung des Separators zwischen Gehäusedeckel und Dichtung verhindert. Man erhält auf diese Weise also eine zusätzliche Sicherung.

Gemäss einer bevorzugten Ausführungsform der Erfindung umfasst das galvanische Element ferner wenigstens ein elektrisch leitfähiges Federelement, welches an dem Gehäusebecher oder dem Gehäusedeckel abgestützt ist und über ein elektrisch leitendes Zwischenelement die Kathode beziehungsweise die Anode in Richtung des Separators drückt. Dabei steht die Kathode beziehungsweise die Anode dann über das Zwischenelement und das Federelement mit dem Gehäusebecher beziehungsweise den Gehäusedeckel in elektrischem Kontakt. Wenn nur ein Federelement verwendet wird, so befindet sich dieses vorzugsweise auf der Kathodenseite, d.h. es ist an dem Gehäusebecher abgestützt und drückt die Kathode über ein elektrisch leitendes Zwischenelement, welches zwischen der Feder und der Kathode liegt, in Richtung des Separators. Besonders bevorzugt ist eine Lösung, bei der sowohl auf der Anoden- als auch auf der Kathodenseite jeweils ein Federelement verwendet wird.

Das Federelement dient dazu, die Zuverlässigkeit des elektrischen Kontaktes zwischen dem elektroaktiven Material der Kathode bzw. der Anode einerseits und dem Gehäuse andererseits zu erhöhen. Durch Temperatureinwirkung oder durch hohe mechanische Beanspruchung kann sich nämlich der Kontaktwiderstand zwischen dem Kathoden- bzw. Anodenmaterial und dem Gehäuse erhöhen, so dass es zu einer Verschlechterung des Kontaktes kommt. Dies gilt insbesondere dann, wenn ein Teil des elektroaktiven Materials bereits verbraucht ist. Das Federelement steht an einer Seite mit dem Gehäuse in elektrischer Verbindung, und drückt an der anderen Seite ein elektrisch leitendes Zwischenelement an die Kathode bzw. die Anode, so dass immer eine elektrisch leitende Verbindung zwischen Kathode bzw. Anode und dem Gehäuse hergestellt ist. Damit wird eine zuverlässige elektrische Kontaktierung gewährleistet.

Das Federelement ist vorzugsweise mit dem Gehäusebecher oder dem Gehäusedeckel fest verbunden, beispielsweise verschweisst. Diese feste Verbindung des Federelementes mit dem Gehäusebecher bzw. dem Gehäusedeckel kann vor dem eigentlichen Zusammenbau des galvanischen Elementes hergestellt werden. Das Federelement kann so schon vorab in Bezug auf den Gehäusebecher bzw. den Gehäusedeckel zentriert werden, und kann beim anschliessenden Zusammenbau nicht mehr verrutschen.

Gemäss einer besonders bevorzugten Ausführungsform der Erfindung weist das Federelement wenigstens drei in Bezug auf seine Mitte symmetrisch angeordnete Federarme auf. Dabei besitzt jeder der Federarme eine Auflagefläche, die auf dem elektrisch leitenden Zwischenelement aufliegt. Durch diese sternförmig angeordneten Arme wird die Andrückkraft der Feder gleichmässig über das elektrisch leitende Zwischenelement verteilt, sodass dieses senkrecht zur Ebene des Separators in Richtung Anode bzw. Kathode gedrückt wird. Das Zwischenelement dient seinerseits dazu, die Andrückkraft von den drei Armen auf eine grössere Auflagefläche zu verteilen, sodass sich die Arme des Federelementes nicht in das elektroaktive Material der Elektrode bohren können.

Das elektrisch leitende Zwischenelement kann beispielsweise eine Kreisscheibe mit einer zentralen Aussparung umfassen, wobei der Durchmesser der Kreisscheibe im Wesentlichen dem Durchmesser der Kathode und der Anode entspricht. Durch die Aussparung gewinnt man Raum für das aktive Material. Im Prinzip genügt eine schmale Ringscheibe als elektrisch leitendes Zwischenelement, auf dem sich die Federarme abstützen.

Im Folgenden wird die Erfindung an Hand eines bevorzugten Ausführungsbeispiels und unter Bezugnahme auf die beigefügten Figuren genauer beschrieben. Dabei zeigen die Figuren im Einzelnen:
Fig. 1: eine Explosionsdarstellung eines galvanischen Elements,
Fig. 2: eine teilweise Explosionsdarstellung des galvanischen Elements aus Figur 2, und
Fig. 3: einen Schnitt durch das galvanische Element aus den Figuren 1 und 2.

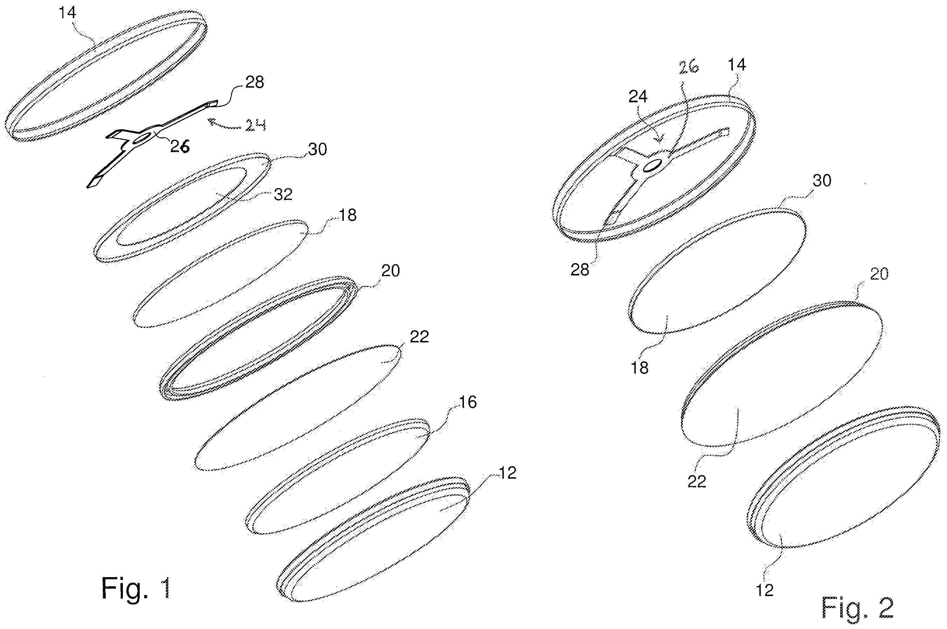

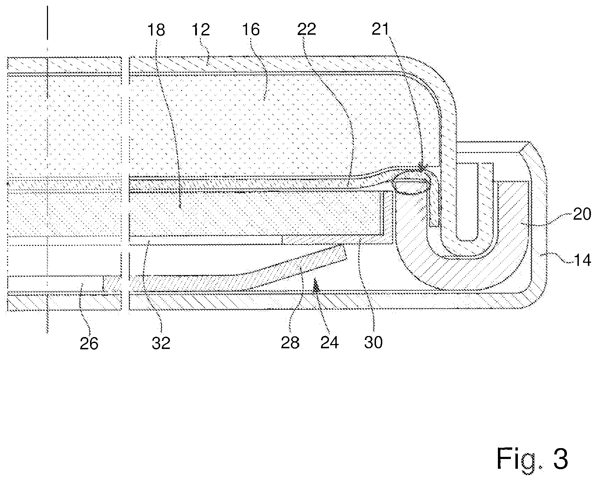

Figur 3 zeigt ein Schnitt durch ein erfindungsgemässes galvanisches Element, bei dem es sich hier um eine Knopfzelle handelt. Figur 1 zeigt die einzelnen Bestandteile der Knopfzelle vor dem Zusammenbau. Figur 2 zeigt ein Zwischenstadium vor dem endgültigen Zusammenbau der Zelle, in dem einzelne Bestandteile jeweils schon aneinander montiert sind. Die Zeichnungen sind nicht massstabsgetreu, da es zum Verständnis der Erfindung nicht auf die genauen Dimensionen ankommt.

Die Knopfzelle besitzt ein Gehäuse, welches einen Gehäusebecher 14 und einen Gehäusedeckel 12 umfasst, wie sie aus dem Stand der Technik bekannt sind.

Zur Abdichtung des Gehäuses dient ein ringförmiges Dichtungselement 20 mit U-förmigem Querschnitt. Dieses Dichtungselement dient gleichzeitig dazu, den Gehäusebecher 14 und den Gehäusedeckel 12 voneinander elektrisch zu isolieren. Die Verwendung solcher Dichtungsringe mit U-förmigem Querschnitt ist aus dem Stand der Technik bekannt, so dass eine genauere Beschreibung des Dichtungselementes und seiner Lage zwischen dem Becher 14 und dem Deckel 12 bei fertig montierter Zelle (vgl. Fig. 3) hier nicht gegeben werden soll.

In dem Gehäusebecher 14 sitzt ein Federelement 24, welches genau wie der Gehäusebecher aus einem leitfähigem Material, beispielsweise einem dünnen Blech hergestellt ist. Es kann beispielsweise aus einem geeigneten Blech ausgestanzt und anschliessend zurechtgebogen werden. Wie in den Figuren 1 und 2 zu sehen ist, besitzt das Federelement 24 einen im Wesentlichen ringförmigen Mittelteil 26, von dem drei identische lang gestreckte Arme 28 mit rechteckiger Grundfläche sternförmig ausgehen. Zwischen zwei benachbarten Armen 28 liegt dabei jeweils ein Winkel von 120. Die drei Arme 28 sind aussen von dem Gehäusebecher 14 weg abgewinkelt. Vor dem Zusammenbau der Zelle wird das Federelement 24 mit dem Gehäusebecher 14 verschweisst. Figur 2 zeigt oben den Gehäusebecher 14 mit dem daran verschweissten Federelement 24, und man sieht, dass der ringförmige Mittelteil 26 des Federelementes 24 mittig in dem Gehäusebecher 14 sitzt und flach auf dem Boden des Gehäusebechers 14 aufliegt, während die drei abgewinkelten Arme 28 von dem Boden des Bechers 14 abstehen und für die gewünschte Federkraft sorgen, wie weiter unten genauer erläutert werden wird.

Auf der Seite des Gehäusedeckels 12 befindet sich wie üblich eine Anode 16, beispielsweise eine Lithiumtablette. Auf der Seite des Gehäusebechers 14 befindet sich eine Kathode 18, bei der es sich beispielsweise um eine gepresste Mangandioxid (MnO₂)-Tablette handeln kann.

Zwischen dem Becher 14 mit dem Federelement 24 und der Kathode 18 liegt ein Stützring 30, der in Figur 1 separat dargestellt ist und als elektrisch leitendes Zwischenelement zwischen dem Federelement 24 und der Kathode 18 dient. Dieser Stützring 30 hat im Wesentlichen die Form eines Bechers mit einem kreisförmigen Boden, der eine konzentrische kreisförmigen Aussparung 32 besitzt, und eine in Bezug zu dem Boden senkrecht stehende zylindrische Wand aufweist. Der Stützring 30 ist dabei gerade so gross, dass er die Kathode 18 aufnehmen kann. Vor dem Zusammenbau der Knopfzelle wird die Kathode 18 in den Stützring 30 eingesetzt, wie in Figur 2 gezeigt. Wenn ein Federelement auf der Anodenseite verwendet wird, kann anstelle eines solchen Stützrings auch eine einfache metallische Kreisscheibe als elektrisch leitendes Zwischenelement verwendet werden, da zumindest bei dem hier gewählten Beispiel mit einer metallischen Lithiumtablette als Anode keine Stützung am Rand notwendig ist.

Anode 16 und Kathode 18 sind wie üblich durch einen kreisscheibenförmigen Separator 22 voneinander getrennt. Bei den aus dem Stand der Technik bekannten Knopfzellen besitzt der Separator 22 jedoch im Wesentlichen den gleichen Durchmesser wie die Anode 16 und die Kathode 18, während hier, wie man insbesondere in Figur 1 erkennt, der Separator 22 einen grösseren Durchmesser aufweist als die Kathode 18 und die Anode 16.

Schon vor dem Zusammenbau der Knopfzelle werden der Separator 22 und das Dichtungselement 20 in einem Befestigungsbereich 21 miteinander verbunden. Um das Dichtungselement 20 mit dem Separator 22 zu verbinden, kann beispielsweise die innere Dichtungslippe, d.h. der innere Schenkel des U des Dichtungselementes 20, oben mit einem Kleber bestrichen werden. Anschliessend wird der Separator 22 zentriert auf das Dichtungselement 20 aufgelegt und angepresst, sodass man eine ringförmige geklebte Verbindung in dem Befestigungsbereich 21 erhält. Alternativ kann der Separator 22 aber auch mit dem Dichtungselement 20 verschweisst oder auf anderer Weise an ihm befestigt werden.

In Figur 2 ist der mit dem Dichtungselement 20 verbundene Separator 24 gezeigt, und man sieht, dass der Separator 22 sich immer noch im Wesentlichen in einer Ebene erstreckt. Dabei liegt er auf der inneren Dichtungslippe des U-förmigen Dichtungselementes 20 auf und ragt radial nach aussen über diese hinaus, so dass sein äusserer Rand locker über der Öffnung des U-förmigen Dichtungselementes liegt.

Beim Zusammenbau der in Figur 3 gezeigten Knopfzelle wird wie folgt vorgegangen:
Zunächst wird wie oben beschrieben das Federelement 24 mit dem Becher 14 verschweisst. Die Kathode 18 wird in den Stützring 30 eingelegt. Ferner wird der Separator 22, ebenfalls wie oben bereits beschrieben, mit dem Dichtungselement 20 verbunden. Die Lithiumtablette 16, welche die Anode bildet, wird in den Gehäusedeckel 12 gepresst (vergleiche Figur 2). Nach Durchführung dieser Zwischenschritte erhält man die in Fig. 2 gezeigte Anordnung.

Anschliessend wird der Deckel 12 mit der darin sitzenden Anode 16 in die bereits mit dem Separator 22 verbundene Dichtung 22 chassiert. Der Rand des Gehäusedeckels 12 knickt dabei den radial äusseren Bereich des Separators 22 um, welcher nach aussen über die innere Dichtungslippe des Dichtungselementes 20 übersteht, und drückt ihn in die in Figur 3 gezeigte Position. Der Separator 22 ist nun an seinem äusseren Umfang zwischen dem Gehäusedeckel 12 und dem Dichtungselement 20 eingeklemmt und somit doppelt gegen ein Verrutschen gesichert. Man erhält dadurch eine Aufteilung des Inneren der Zelle in zwei durch den Separator 22 voneinander getrennte Kammern. Selbst wenn sich Partikel aus der Kathode (oder der Anode) lösen sollten, so können diese nicht den Separator 22 umwandern und so einen Kurzschluss verursachen.

In einem nächsten Schritt wird die zuvor mit einem Elektrolyten getränkte und in den Stützring 30 eingesetzte Kathode 18 in das Dichtungselement 20 und auf den Separator 22 gelegt.

Schliesslich wird der Gehäusebecher 14 mit dem daran verschweissten Federelement 24 auf den Gehäusedeckel 12 chassiert, und die Knopfzellen werden mit einer Presse geschlossen.

Wie man in Fig. 3 sieht, dient der kreisscheibenförmige Boden des Stützrings 30 als Auflagefläche für die Arme 28 des Federelementes 24. Die in Richtung des Stützringes 30 und der Kathode 18 abgewinkelten Arme 28 des Federelementes drücken den Stützring 30 von dem Gehäusebecher 14 weg auf die Kathode 18. Über das Federelement 24 und den Stützring 30 wird somit ein elektrischer Kontakt zwischen dem Becher 14 und der Kathode 18 hergestellt. Auch wenn das Kathodenmaterial verbraucht wird, und auch wenn die Batterie hohen mechanischen Beanspruchungen, hohen Temperaturen oder hohen Drücken ausgesetzt wird, ist dank der Konstruktion mit dem Federelement 24 und dem Stützring 30 ein zuverlässiger Kontakt gewährleistet.

### Bezuqszeichenliste

- 12: Gehäusedeckel
- 14: Gehäusebecher
- 16: Anode
- 18: Kathode
- 20: Dichtungselement
- 21: Befestigungsbereich
- 22: Separator
- 24: Federelement
- 26: zentraler Bereich des Federelementes
- 28: Arm des Federelementes
- 30: Stützring
- 32: Ausnehmung in Stützring

## Patentansprüche

1. Galvanisches Element, insbesondere vom Knopfzellentyp, mit einer Kathode (18), einer Anode (16), einem Elektrolyten, einem zwischen Anode (16) und Kathode (18) angeordneten Separator (22) und einem Gehäuse, welches einen Gehäusebecher (14), einen Gehäusedeckel (12) und ein Dichtungselement (20) umfasst, wobei das Dichtungselement (20) den Gehäusebecher (14) gegen den Gehäusedeckel (12) isoliert,
**dadurch gekennzeichnet, dass**
das Dichtungselement (20) in radialer Richtung einen U-förmigen Querschnitt mit zwei Dichtungslippen aufweist, und dass der Separator (22) wenigstens über die in radialer Richtung innere Dichtungslippe radial nach aussen übersteht,
dass der Separator (22) mit der inneren Dichtungslippe des Dichtungselementes (20) fest verbunden ist, und dass der radial aussen über diese inneren Dichtungslippe überstehende Teil des Separators (22) senkrecht zu seinem radial innen von dem Dichtungselement (20) liegenden Bereich abknickt,
dass der radial aussen über die innere Dichtungslippe des Dichtungselementes (20) überstehende Teil des Separators (20) zwischen dem Gehäusedeckel (12) und dieser Dichtungslippe des Dichtungselementes (20) eingeklemmt ist,
und dass das Dichtungselement (20) mit dem Separator (22) kontinuierlich entlang einem gesamten ringförmigen Befestigungsbereich (21), der auf einer obere Oberfläche der besagten inneren Dichtungslippe angeordnet ist, verschweisst oder geklebt ist, wobei die Oberfläche in einer Ebene orthogonal zur radialen Richtung erstreckt.

2. Galvanisches Element nach Anspruch 1, **dadurch gekennzeichnet, dass** das Dichtungselement (20) ringförmig ist und entlang seines gesamten Umfangs fest mit dem Separator (22) verbunden ist.

3. Galvanisches Element nach einem der vorstehenden Ansprüche, **dadurch gekennzeichnet, dass** es wenigstens ein elektrisch leitfähiges Federelement (24) umfasst, welches an dem Gehäusebecher (14) oder an dem Gehäusedeckel (12) abgestützt ist, und über ein elektrisch leitendes Zwischenelement (30) die Kathode (18) bzw. die Anode (16) in Richtung des Separators (22) drückt, wobei die Kathode (18) bzw. die Anode (16) über das Zwischenelement (30) und das Federelement (24) mit dem Gehäusebecher (14) bzw. dem Gehäusedeckel (12) in elektrischem Kontakt steht.

4. Galvanisches Element nach Anspruch 3, **dadurch gekennzeichnet, dass** das Federelement (24) mit dem Gehäusebecher (14) oder dem Gehäusedeckel (12) fest verbunden, insbesondere verschweisst ist.

5. Galvanisches Element nach Anspruch 3 oder 4, **dadurch gekennzeichnet, dass** das Federelement (24) wenigstens drei in Bezug auf seine Mitte symmetrisch angeordnete Federarme (28) aufweist, die jeweils eine Auflagefläche besitzen, welche auf dem elektrisch leitenden Zwischenelement (30) aufliegt.

6. Galvanisches Element nach einem der Ansprüche 3 bis 5, **dadurch gekennzeichnet, dass** das elektrisch leitende Zwischenelement (30) eine Kreisscheibe mit einer zentralen Aussparung (32) umfasst, deren Durchmesser im Wesentlichen dem Durchmesser der Kathode (18) und der Anode (16) entspricht.

## Claims

1. Galvanic element, in particular of the button cell type, having a cathode (18), an anode (16), an electrolyte, a separator (22) which is disposed between anode (16) and cathode (18), and a housing which includes a housing case (14), a housing cover (12) and a sealing element (20), the sealing element (20) insulating the housing case (14) relative to the housing cover (12),
**characterised in that**
the sealing element (20) has a U-shaped cross-section in radial direction, with two sealing lips, and **in that** the separator (22) protrudes radially outwards at least beyond the inner sealing lip in radial direction,
**in that** the separator (22) is connected securely to the inner sealing lip of the sealing element (20), and **in that** the part of the separator (22) which protrudes radially outwards beyond this inner sealing lip bends away perpendicular to the region thereof which is situated radially inwards of the sealing element (20),
and **in that** the part of the separator (20) which protrudes radially outwards beyond the inner sealing lip of the sealing element (20) is clamped between the housing cover (12) and this sealing lip of the sealing element (20),
and **in that** the sealing element (20) is welded or glued continuously to the separator (22) along an entire annular attachment region (21) which is disposed on an upper surface of said inner sealing lip, the surface extending in a plane orthogonal to the radial direction.

2. Galvanic element according to claim 1, **characterised in that** the sealing element (20) is annular and is connected securely to the separator (22) along the entire circumference thereof.

3. Galvanic element according to one of the preceding claims, **characterised in that** it includes at least one electrically conductive spring element (24) which is supported on the housing case (14) or on the housing cover (12) and presses the cathode (18) or the anode (16) in the direction of the separator (22) via an electrically conductive intermediate element (30), the cathode (18) or the anode (16) being in electrical contact with the housing case (14) or the housing cover (12) via the intermediate element (30) and the spring element (24).

4. Galvanic element according to claim 3, **characterised in that** the spring element (24) is connected securely, in particular welded, to the housing case (14) or to the housing cover (12).

5. Galvanic element according to claim 3 or 4, **characterised in that** the spring element (24) has at least three spring arms (28) which are disposed symmetrically relative to the centre thereof and have respectively a support surface which is situated on the electrically conductive intermediate element (30).

6. Galvanic element according to one of the claims 3 to 5, **characterised in that** the electrically conductive intermediate element (30) includes a circular disc with a central recess (32), the diameter of which corresponds essentially to the diameter of the cathode (18) and of the anode (16).

## Revendications

1. Elément galvanique, en particulier du type pile-bouton, avec une cathode (18), une anode (16), un électrolyte, un séparateur (22) disposé entre l'anode (16) et la cathode (18) et un boîtier, lequel comprend un logement (14), un couvercle de boîtier (12) et un élément d'étanchéité (20), dans lequel l'élément d'étanchéité (20) isole le logement (14) par rapport au couvercle de boîtier (12),
**caractérisé en ce que**
l'élément d'étanchéité (20) présente dans la direction radiale une section transversale en forme de U avec deux lèvres d'étanchéité, et **en ce que** le séparateur (22) dépasse vers l'extérieur au moins au-delà de la lèvre d'étanchéité intérieure dans la direction radiale,
le séparateur (22) est relié de manière fixe à la lèvre d'étanchéité intérieure de l'élément d'étanchéité (20), et **en ce que** la partie du séparateur (22) dépassant radialement vers l'extérieur au-delà de cette lèvre d'étanchéité intérieure est pliée perpendiculairement à sa zone située radialement à l'intérieur de l'élément d'étanchéité (20),
la partie du séparateur (20) dépassant radialement à l'extérieur au-dessus de la lèvre d'étanchéité intérieure de l'élément d'étanchéité (20) est coincée entre le couvercle de boîtier (12) et cette lèvre d'étanchéité de l'élément d'étanchéité (20),
et l'élément d'étanchéité (20) est soudé ou collé de façon continue au séparateur (22) le long d'une zone de fixation annulaire complète (21) qui est disposée sur une surface supérieure de ladite lèvre d'étanchéité intérieure, la surface s'étendant dans un plan orthogonal à la direction radiale.

2. Elément galvanique selon la revendication 1, **caractérisé en ce que** l'élément d'étanchéité (20) est annulaire et est relié de manière fixe au séparateur (22) le long de l'ensemble de sa circonférence.

3. Elément galvanique selon l'une des revendications précédentes, **caractérisé en ce qu'**il comprend au moins un élément élastique électriquement conducteur (24) qui est en appui au niveau du logement (14) ou sur le couvercle de boîtier (12) et presse la cathode (18) ou l'anode (16) en direction du séparateur (22) via un élément intermédiaire (30) électriquement conducteur, dans lequel la cathode (18) ou l'anode (16) est en contact électrique avec le logement (14) ou le couvercle de boîtier (12) par l'intermédiaire de l'élément intermédiaire (30) et l'élément élastique (24).

4. Elément galvanique selon la revendication 3, **caractérisé en ce que** l'élément élastique (24) est relié de manière fixe, en particulier soudé au logement (14) ou au couvercle de boîtier (12).

5. Elément galvanique selon la revendication 3 ou 4, **caractérisé en ce que** l'élément élastique (24) présente au moins trois bras élastiques (28) disposés symétriquement par rapport à leur milieu, lesquels possèdent respectivement une surface d'appui qui est située sur l'élément intermédiaire électroconducteur (30).

6. Elément galvanique selon l'une des revendications 3 à 5, **caractérisé en ce que** l'élément intermédiaire électriquement conducteur (30) comprend un disque circulaire avec un évidement central (32) dont le diamètre correspond sensiblement au diamètre de la cathode (18) et de l'anode (16).
